# EUROPEAN PATENT APPLICATION

(11) **EP 2 418 670 A1**
(43) Date of publication of application: **15.02.2012**
(21) Application number: 10008457.3
(22) Date of filing: 13.08.2010
(51) Int. Cl.: H01H 33/66, B29C 45/14

(54) **Fibre reinforced insulation material for embedded vacuum interrupters**

(71) Applicant: ABB Technology AG, 8050 Zürich (CH)
(72) Inventor: Shang, Wenkai, Dr.-Ing., 40878 Ratingen (DE); Humpert, Christof, Dr.-Ing., 47877 Willich (DE)
(74) Representative: Schmidt, Karl Michael

(57) **Abstract**

The present invention is concerned with the embedding of vacuum interrupters, in particular with a vacuum interrupter (300) embedded in an insulating material (301), the insulating material (301) comprising a first main layer (100) having a first sub-layer (101), a second sub-layer (102), and a third sub-layer (103). The second sub-layer (102) is arranged between the first sub-layer (101) and the third sub-layer (103). The first sub-layer (101), the second sub-layer (102), and the third sub-layer (103) comprise fibres, wherein the first sub-layer (101) comprises a group of first fibres (110) which are arranged in parallel with respect to each other.

## Description

### FIELD OF THE INVENTION

The invention relates to the field of vacuum interrupters. In particular, the invention relates to a vacuum interrupter embedded in an insulating material, to the use of an insulating material for embedding a vacuum interrupter and to a method of embedding a vacuum interrupter in an insulating material.

### BACKGROUND OF THE INVENTION

Embedded vacuum interrupters in suitable insulation material provide an increased external dielectric strength of the vacuum interrupter compared to the insulation capacity of air and a protection against external mechanical influences such as impacts.

The insulating material needs to provide certain mechanical and electrical insulating properties in order to enable the increased external dielectric strength of the vacuum interrupters of the embedded vacuum interrupter and the necessary mechanical protection against external mechanical influences.

### DESCRIPTION OF THE INVENTION

It may be seen as an object of the invention to provide an insulating material to embed a vacuum interrupter to achieve an improved, efficient mechanical and electrical insulation of the embedded vacuum interrupter.

This objective is achieved by a vacuum interrupter embedded in an insulating material, the use of an insulating material for embedding the vacuum interrupter, and the method of embedding the vacuum interrupter in an insulating material according to the independent claims. Further embodiments are evident from the dependent claims.

According to an embodiment of the invention, a vacuum interrupter embedded in an insulating material is provided, the insulating material comprising a first main layer, having a first sub-layer, a second sub-layer, and a third sub-layer. The second sub-layer is arranged between the first sub-layer and the third sub-layer, wherein the first sub-layer, the second sub-layer, and the third sub-layer comprises fibres. The first sub-layer comprises a group of first fibres which are arranged in parallel with respect to each other, and parallel to the third sublayer, the fiber orientation in second sublayer is vertical to first and third sublayer.

The fibre orientation may be of vital importance in order to get needed mechanical strength for the embedded pole around the vacuum interrupter. The optimal fibre orientation is achieved by suitable design of the applying mechanism of the insulating material to the vacuum interrupter to achieve the optimal performance of the embedded pole of the vacuum interrupter.

The insulating material with a first main layer having three sub-layers enables an increased external dielectric strength of the vacuum interrupter embedded by the insulating material compared to air as well as a good protection against external mechanical influences.

Furthermore, such a vacuum interrupter embedded in an insulating material as mentioned above provides a usability of the embedded vacuum interrupter in an extremely wide range of climatic conditions, as well as a good protection of the vacuum interrupter from dust, mechanical impact, and moisture.

With such an insulating material embedding the vacuum interrupter, an increased production reliability may be achieved with shortened production times, therefore making the manufacturing process of the insulating material to the vacuum interrupter more efficient.

The arrangement of three layers over each other, wherein the first sub-layer comprises a group of first fibres which are arranged in parallel with respect to each other allows for a good material efficiency optimizing the material use because of an improved strength and protection against mechanical impacts as well as atmospheric influences, such as rain, UV radiation, ice, snow, and extreme cold.

According to another embodiment of the invention the group of first fibres consists of one of 10%, 20%, 25%, 30%, 40%, 45%, 50%, less than 50%, more than 50%, 60%, 70%, 75%, 80%, 90%, 100% of the fibres of the first sub-layer.

According to another embodiment of the invention, the second sub-layer comprises a group of second fibres which are arranged in parallel with respect to each other.

According to another embodiment of the invention, the group of second fibres comprises one of 10%, 20%, 25%, 30%, 40%, 45%, 50%, more than 50%, less than 50%, 60%, 70%, 75%, 80%, 90%, 100% of the fibres of the second sub-layer.

According to another embodiment of the invention, the third sub-layer comprises a group of third fibres which are arranged in parallel with respect to each other.

According to another embodiment of the invention, the group of third fibres comprises one of 10%, 20%, 25%, 30%, 40%, 45%, 50%, more than 50%, less than 50%, 60%, 70%, 75%, 80%, 90%, 100% of the fibres of the third sub-layer.

According to another embodiment of the invention, the first sub-layer comprises a group of fourth fibres which are arranged in parallel with respect to each other but not parallel to the group of first fibres. Such an arrangement of fourth fibres not in parallel to the group of first fibres allows for an improved strength of the first sub-layer, electrical and mechanical strength of the first sub-layer when applied to the vacuum interrupter, for example on the compensation layer which is on the vacuum interrupter ceramic.

According to another embodiment of the invention, the orientation of the first fibres is defined as a main fibre orientation of the first main layer, wherein the vacuum interrupter has a main axis corresponding to a main current flow direction of the vacuum interrupter. The orientation of the first fibres is parallel or orthogonal to the main axis of the vacuum interrupter.

The orientation of the first fibres can be in any arbitrary angle to the main axis of the vacuum interrupter according to another embodiment of the invention.

According to another embodiment of the invention, the first fibres are orientated in one of a 0°-direction, a 30°-direction, a 45°-direction, a 60°-direction, and a 90°-direction with respect to the main axis of the vacuum interrupter.

According to another embodiment of the invention, the second sub-layer comprises a group of fifth fibres which are arranged in parallel with respect to each other but not parallel to the group of second fibres.

Such an arrangement of the fifth fibres not parallel to the second fibres may increase the electrical and mechanical strength of the second sub-layer itself, and when applied to the first sub-layer, the electrical and mechanical strength of the embedded vacuum interrupter.

According to another embodiment of the invention, the second fibres are orientated in a direction which is not parallel to the direction of the first fibres.

According to another embodiment of the invention, the second fibres are orientated in one of a 30°-direction, a 45°-direction, a 60°-direction and a 90°-direction with respect to the direction of the first fibres.

According to another embodiment of the invention, the third sub-layer comprises a group of sixth fibres which are arranged in parallel with respect to each other but not parallel to the group of third fibres.

According to another embodiment of the invention, the third fibres are orientated in a direction which is not parallel to the direction of the second fibres.

According to another embodiment of the invention, the third fibres are orientated in one of a 30°-direction, a 45°-direction, a 60°-direction, and a 90°-direction with respect to the direction of the second fibres.

According to another embodiment of the invention the third fibres are orientated parallel to the first fibres.

Such an arrangement of the first and third fibres in parallel to each other being part of the first sub-layer and the second sub-layer and a third sub-layer enclosing the second sub-layer improves the electrical insulation and mechanical properties of the insulating material embedded vacuum interrupter.

According to another embodiment of the invention, the insulating material embedding the vacuum interrupter further comprises a second main layer, wherein the second main layer is designed like the first main layer. The second main layer is arranged with respect to the first main layer such that the main fibre orientation of the second main layer is not parallel to the main fibre orientation of the first main layer.

Such an arrangement improves the electrical and mechanical strength of the insulating material comprising a first and a second main layer as well as by the insulating material embedded vacuum interrupter.

According to another embodiment of the invention, the second main layer is arranged with respect to the first main layer such that the main fibre orientation of the second main layer is orientated in one of a 30°-direction, a 45°-direction, a 60°-direction, and a 90°-direction with respect to the main fibre orientation of the first main layer.

According to another embodiment of the invention, the insulating material of the vacuum interrupter further comprises at least one third, additional main layer, which is designed like the first main layer.

The third main layer is arranged with respect to the second main layer such that the main fibre orientation of the third main layer is not parallel to the main fibre orientation of the second main layer.

Such an arrangement of the third main layer with respect to the second main layer improves the electrical and mechanical strength of the insulating material comprising three main layers as well as the electrical and mechanical strength by the insulating material embedded vacuum interrupter.

According to another embodiment of the invention, the third main layer is arranged with respect to the second main layer such that the main fibre orientation of the third main layer is orientated in one of 30°-direction, a 45°-direction, a 60°-direction, and a 90°-direction with respect to the main fibre orientation of the second main layer.

According to another embodiment of the invention, the third main layer is arranged with respect to the second main layer such that the main fibre orientation of the third main layer is parallel to the main fibre orientation of the first main layer.

According to another embodiment of the invention, the insulating material comprises materials selected from the group comprising of a fibre reinforced thermoplastic, a fibre-reinforced thermoset, a mineral reinforced material, a mixture of a glass fibre and of a mineral reinforced material, a nano-particle reinforced material, and a mixture of a nano-particle reinforced glass fibre and of a mineral reinforced material and any combination of them.

According to another embodiment of the invention, the insulating material comprises a glass fibre reinforced thermoplastic based on one of semi-crystalline polyamide, partially aromatic copolyamides, a mixture of semi-crystalline polyamide and of aromatic copolyamides. The glass fibre reinforced thermoplastic may comprise a material selected from the group consisting of polyamide 6 (PA6), polyamide 66 (PA66), phenylpropanolamin 66 (PPA66), polyamide 6/6T (PA6/6T), polyamide 61/6T (PA6l/6T), polyamide 6T/66 (PA6T/66), polyamide 12 (PA12), polyamide 612 (PA612), polyamide 12G (PA12G), polyamide-6-3 (PA-6-3), polyacrylic acid (PAA), phenylpropanolamin (PPA), polyamide MXD6 (PAMXD6), and a mixture of the above-mentioned material with additives.

According to another embodiment of the invention, the insulating material comprises a glass fibre reinforced thermoplastic based on one of a polyester-based polymer of the group consisting of polybutyleneterephthalate (PBT), polyethyleneterephthalate (PET), and a mixture of PBT and PET.

According to another embodiment of the invention, the insulating material comprises a mixture of above-mentioned polyester-based polymer and additives.

According to another embodiment of the invention, the insulating material comprises a glass fibre reinforced thermoplastic selected from the group consisting of polyphenylenether (PPE), polyetheretherketon (PEEK), Liquid Crystal Polymer (LCP), polyethersulfon (PES), polypropylen (PP), polyphenylensulfid (PPS), polyphenylsulfon (PPSU).

According to another embodiment of the invention, the insulating material comprises a glass fibre reinforced thermoset material selected from the group consisting of bulk molding compound (BMC), unsaturated polyester (UP), epoxy/ epoxide (EP) material.

According to another embodiment of the invention, the use of an insulating material for embedding a vacuum interrupter according to anyone of the above-mentioned embodiments is provided, the insulating material comprising a first main layer having a first sub-layer, a second sub-layer, and a third sub-layer. The second sub-layer is arranged between the first sub-layer and the third sub-layer. The first sub-layer, the second sub-layer, and the third sub-layer comprise fibres, wherein the first sub-layer comprises a group of first fibres which are arranged in parallel with respect to each other.

According to another embodiment of the invention, a method of embedding a vacuum interrupter in an insulating material is provided, the method comprising the steps of applying a first sub-layer to the vacuum interrupter, applying a second sub-layer to the first sub-layer, and applying a third sub-layer to the second sub-layer. The first sub-layer, the second sub-layer, and the third sub-layer comprise fibres, wherein the first sub-layer comprises a group of first fibres, which are arranged in parallel with respect to each other. This could also be achieved by one production step.

Between the main layers and between the ceramic and main layers, if need, adhevsive layer (primer) could also be applied.

These and other aspects of the present invention will become apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1A shows a schematic cross-sectional view of parts of a vacuum interrupter embedded by an insulating material according to an embodiment of the invention.
Fig. 1B shows a schematic cross-sectional view of a part of a vacuum interrupter embedded in an insulating material according to another embodiment of the invention.
Fig. 1C shows a schematic cross-sectional view of a part of a vacuum interrupter embedded in an insulating material according to another embodiment of the invention.
Fig. 1D shows a schematic view of a part of the insulating material applied on the vacuum interrupter according to an embodiment of the invention.
Fig. 1E shows a schematic view of a part of the insulating material applied on the vacuum interrupter according to another embodiment of the invention.
Fig. 1F shows a schematic view of a part of the insulating material applied on the vacuum interrupter according to another embodiment of the invention.
Fig. 2 shows a cross-sectional view of a part of a vacuum interrupter embedded by an insulating material comprising three main layers according to another embodiment of the invention.
Fig. 3 shows a schematic cross-sectional view of a vacuum interrupter embedded in an insulating material.
Fig. 4 shows a flow-chart of a method for embedding a vacuum interrupter an insulating material according to another embodiment of the invention.

The reference symbols used in the drawings, and their meanings, are listed in summary form in a list of reference symbols. In principle, identical parts are provided with the same reference symbols in the figures.

### DETAILED DESCRIPTION OF EXEMPLARY EMBODIMENTS

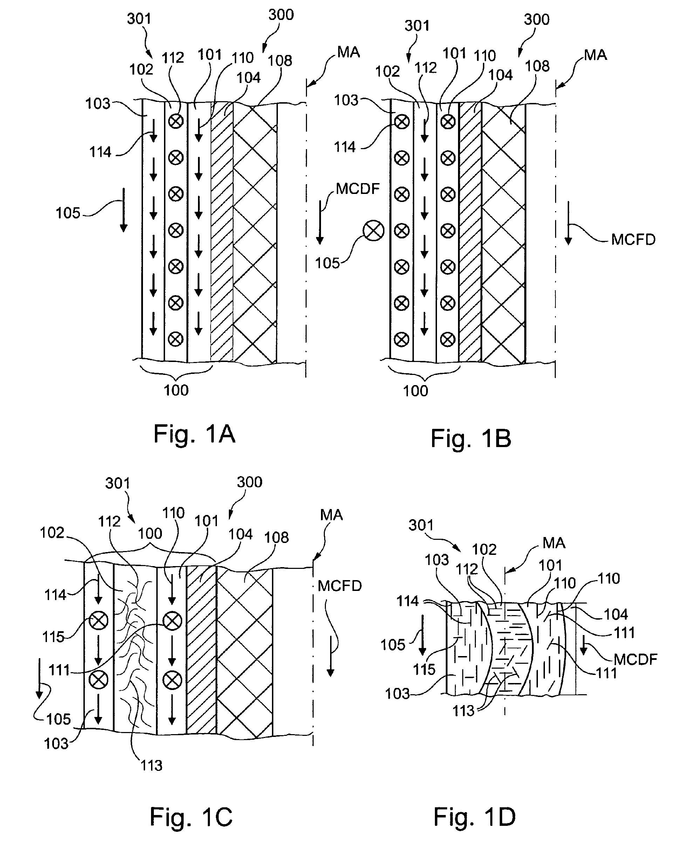

Fig. 1A shows a vacuum interrupter 300 embedded in an insulating material 301. The vacuum interrupter 300 has a main axis MA corresponding to a main current flow direction MCFD of the vacuum interrupter 300. The insulating material 301, a ceramic layer 108, and a compensation layer 104 which is arranged at the ceramic layer 108. The insulating material 301 is arranged at the compensation layer 104 of the vacuum interrupter 300. The insulating material 301 comprises a first main layer 100 having a first sub-layer 101, a second sub-layer 102, and a third sub-layer 103, wherein the first sub-layer 101 is arranged to the compensation layer 104 of the vacuum interrupter.

The second sub-layer 102 is arranged between the first sub-layer 101 and the third sub-layer 103. The first sub-layer 101, the second sub-layer 102, and the third sub-layer 103 comprise fibres 110, 112, 114, wherein the first sub-layer 101 comprises a group of first fibres 110 which are arranged in parallel with respect to each other, the second sub-layer 102 comprises a group of second fibres 112 which are arranged in parallel with respect to each other, and the third sub-layer 103 comprises a group of third fibres 114 which are arranged in parallel with respect to each other.

The group of first fibres 110 comprises one of 10%, 20%, 25%, 30%, 40%, 45%, 50%, more than 50%, less than 50%, 60%, 70%, 75%, 80%, 90%, 100% of the fibres of the first sub-layer 101. The group of second fibres 112 can comprise the same portion of the fibres of the second sub-layer 102 as mentioned above. The group of third fibres 114 can comprise the same portions of the fibres of the third sub-layer 103 as mentioned above.

According to Fig. 1A the orientation of the first fibres 110 is parallel to the main axis MA of the vacuum interrupter. The orientation of the second fibres 112 is orthogonal with respect to the direction of the first fibres 110. The second fibres may be orientated in one of a 30°-direction, a 45°-direction, a 60°-direction, and a 90°-direction with respect to the direction of the first fibres.

The third fibres 114 are orientated in a direction which is not parallel to the direction of the second fibres 112. According to Fig. 1A the third fibres 114 are orientated orthogonal with respect to the direction of the second fibres 112 and parallel to the first fibres 110.

The third fibres 114 may be orientated in one of a 30°-direction, a 45°-direction, a 60°-direction, and a 90°-direction with respect to the direction of the second fibres 112.

The orientation of the first fibres 110 is defined as a main fibre orientation 105 of the first main layer 100.

Fig. 1B shows a schematic cross-sectional view of a part of a vacuum interrupter 300 embedded in insulating material 301 according to Fig. 1A with the difference, that the first fibres 110 of the first sub-layer 101 are orientated in a orthogonal direction to the main axis MA of the vacuum interrupter 300, as well as the third fibres 114 of the third sub-layer 103, which are also orientated in an orthogonal direction with respect to the main axis MA of the vacuum interrupter.

The second fibres 112 of the second sub-layer 102 which is arranged between the first sub-layer 101 and the third sub-layer 103, are orientated in an orthogonal direction with respect to the direction of the first fibres 110, and according to Fig. 1B parallel with respect to the main axis MA of the vacuum interrupter 300. The orientation of the first fibres 110 is defined as a main fibre orientation 105 of the first main layer 100, wherein the main fibre orientation 105 is orthogonal with respect to the main axis MA of the vacuum interrupter 300.

Fig. 1C shows a schematic cross-sectional view of the vacuum interrupter 300 embedded in an insulating material 301 of Fig. 1A with the difference, that the first sub-layer 101 comprises a group of first fibres 110 which are arranged in parallel with respect to each other, and a group of fourth fibres 111 which are arranged in parallel with respect to each other, and orthogonal with respect to the orientation of the first fibres 110. The third sub-layer 103 comprises a group of third fibres 114 which are arranged in parallel with respect to each other, and a group of sixth fibres 115 which are arranged in parallel with respect to each other, but orthogonal to the orientation of the third fibres 114.

The second sub-layer 102 which is arranged between the first sub-layer 101 and the third sub-layer 103, comprises a group of second fibres 112 which may be arranged in parallel with respect to each other, and a group of fifth fibres 113 which may be arranged in parallel with respect to each other, wherein the orientation of the fifth fibres 113 is not parallel to the orientation of the second fibres 112. Essentially in the exemplary embodiment of Fig. 1C the fibres of the second sub-layer 102 are orientated arbitrarily.

The orientation of the first fibres 110 is again defined as a main fibre orientation 105 of the first main layer 100, which main fibre orientation 105 is parallel with respect to the main axis MA of the vacuum interrupter 300.

Fig. 1D shows a schematic view of a part of the insulating material 301 being applied to the vacuum interrupter 300, wherein a first sub-layer 101 of a first main layer 100 of the insulating material 301 is applied to a compensation layer 104 of the vacuum interrupter, the space of 104 can be partly filled or just keep open as air.

A group of first fibres 110 which are arranged in parallel with respect to each other of the first sub-layer 101 may have a 0° orientation, respectively a parallel orientation with respect to the main axis MA corresponding to a main current flow direction MCFD of the vacuum interrupter 300. The first sub-layer 101 further comprises a group of fourth fibres 111 which are arranged in parallel with respect to each other but not parallel to the group of first fibres 110.

A second sub-layer 102 is applied to the first sub-layer 101 and comprises a group of second fibres 112 which are arranged in parallel with respect to each other, and a group of first fibres 113 which are arranged in parallel with respect to each other but not parallel to the group of second fibres 112. The orientation of the second fibres 112 is orthogonal with respect to the orientation of the first fibres 110. The orientation of the second fibres 112 may be orientated in one of a 30°-direction, a 45°-direction, a 60°-direction, and a 90°-direction with respect to the direction of the first fibres 110. The second fibres 112 may also be orientated in a direction which is not parallel to the direction of the first fibres 110.

In Fig. 1D there is shown a third sub-layer 103 applied to the second sub-layer 102 comprising a group of third fibres 114 which are arranged in parallel with respect to each other, and a group of sixth fibres 115 which are arranged in parallel with respect to each other but not parallel to the group of the third fibres 114.

The orientation of the first fibres 110 is defined as a main fibre orientation 105 of the first main layer 100 and is orientated parallel to the main axis MA of the vacuum interrupter 300 according to Fig. 1D.

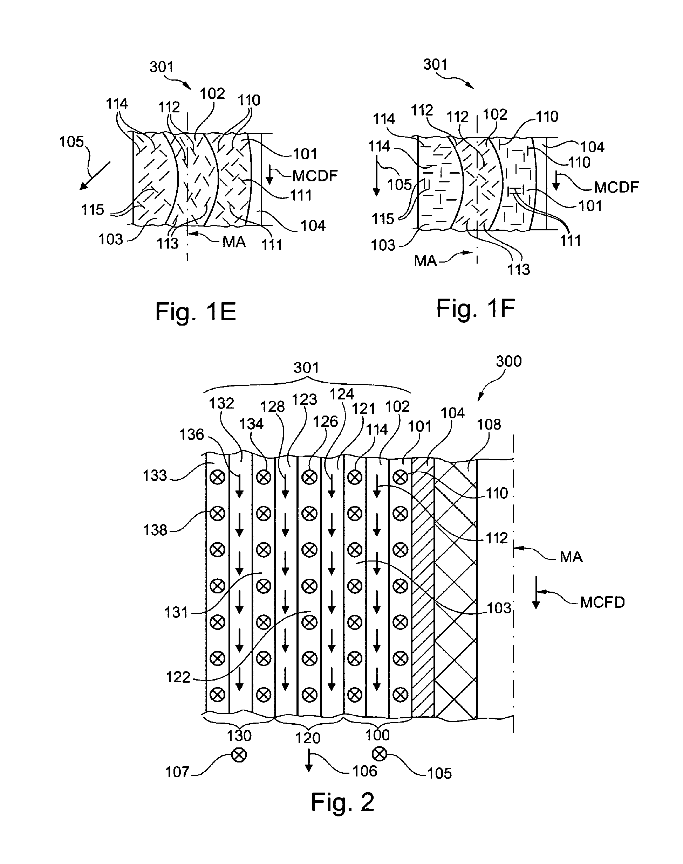

Fig. 1E shows a schematic view of a part of the insulating material 301 being applied to the vacuum interrupter 300 according to Fig. 1D, with the difference that the orientation of the first fibres 110 is basically in a 45°-direction with respect to the main axis MA of the vacuum interrupter 300. The fourth fibres 111 are essentially arranged orthogonal with respect to the orientation of the first fibres 110.

The second fibres 112 and the first fibres 113 of the second layer are basically orientated according to the orientation in Fig. 1C. The fibres 112, 113 of the second sub-layer 102 are arbitrarily orientated with respect to the main axis MA of the vacuum interrupter or with respect to the orientation of the first fibres 110.

The orientation of the third fibres 114 are not parallel with respect to the orientation of the second fibres 102, but essentially parallel with respect to the orientation of the first fibres 110.

The orientation of the sixth fibres 115 is basically orthogonal with respect to the orientation of the third fibres 114.

The main fibre orientation 105 of the first main layer 100, which is defined as the orientation of the first fibres 110 is basically orientated in a 45°-direction with respect to the main axis MA of the vacuum interrupter 300.

Fig. 1F shows a schematic view of the part of an insulating material 301 being applied to the vacuum interrupter according to Fig. 1D with the difference, that the group of fourth fibres 111 of the first sub-layer 101 are orientated basically orthogonal with respect to the orientation of the first fibres 110 of the first sub-layer 101.

The orientation of the second fibres 112 of the second sub-layer 102 is essentially in a 45°-direction with respect to the orientation of the first fibres 110 of the first sub-layer 101. The fifth fibres 113 of the second sub-layer 102 are essentially arranged in an orthogonal direction with respect to the orientation of the second fibres 102.

The orientation of the third fibres 114 of the third sub-layer 103 is essentially parallel with respect to the orientation of the first fibres 110.

The orientation of the sixth fibres 115 of the third sub-layer 103 is essentially orthogonal with respect to the orientation of the third fibres 114.

The main fibre orientation 105 of the first main layer 100 which basically corresponds to the orientation of the first fibres 110 is parallel to the main axis MA of the vacuum interrupter 300.

Fig. 2 shows a schematic cross-sectional view of a part of a vacuum interrupter 300 embedded in an insulating material 301. The vacuum interrupter 300 has a main axis MA corresponding to a main current flow direction MCFD, and a ceramic layer 108 onto which a compensation layer 104 is applied, onto which the insulating material 301 is applied starting with a first main layer 100, followed by a second main layer 120, and a third main layer 130 of the insulating material 301.

A first sub-layer 101 of the first main layer 100 is applied to the compensation layer 104 of the vacuum interrupter 300. The first sub-layer 101 comprises a group of first fibres 110 which are arranged in parallel with respect to each other, and orthogonal to the main axis MA of the vacuum interrupter 300. A second sub-layer 102 of the first main layer 100 is applied to the first sub-layer 101 and comprises a group of second fibres 112 which are arranged in parallel with respect to each other, and orthogonal with respect to the orientation of the first fibres 110.

A third sub-layer of the first main layer 100 is applied to the second sub-layer 102, and comprises a group of third fibres 114 which are arranged in parallel with respect to each other, orthogonal with respect to the orientation of the second fibres 112, and parallel with respect to the first fibres 110. The orientation of the first fibres 110 is defined as a main fibre orientation 105 of the first main layer, which main fibre orientation 105 is orthogonal to the main axis MA of the vacuum interrupter 300.

A first sub-layer 121 of the second main layer 120 is applied to the third sub-layer 103 of the first main layer 100 and comprises a group of seventh fibres 121 which are arranged in parallel with respect to each other, and in an orthogonal direction with respect to the orientation of the third fibres 114 of the first main layer 100, when it is needed between sublayer 120 and 100, an extra layer of adhesive material could be applied, to promote better adhesion between main layer.

A second sub-layer 122 of the second main layer 120 is applied to the first sub-layer 121 of the second main layer 120, and comprises a group of ninth fibres 126 which are arranged in parallel with respect to each other, and essentially orthogonal with respect to the orientation of the seventh fibres 124.

A third sub-layer 123 of the second main layer 120 is applied to the second sub-layer 122 of the second main layer 120, and comprises a group of eleventh fibres 128 which are arranged in parallel with respect to each other, and orthogonal with respect to the orientation of the ninth fibres 126.

The orientation of the seventh fibres 124 is defined as a main fibre orientation 106 of the second main layer 120, which orientation is not parallel to the main fibre orientation 105 of the first main layer 100. The second main layer 120 may be arranged with respect to the first main layer 100 such that the main fibre orientation 106 of the second main layer 120 is orientated in one of a 30°-direction, a 45°-direction, a 60°-direction, and a 90°-direction with respect to the main fibre orientation 105 of the first main layer 100.

A first sub-layer 131 of a third main layer 130 is applied to the third sub-layer 123 of the second main layer 120, and comprises a group of thirteenth fibres 134 which are arranged in parallel with respect to each other, and orthogonal with respect to the orientation of the eleventh fibres 128 of the third sub-layer 123 of the second main layer 120.

A second sub-layer 132 of the third main layer 130 is applied to the first sub-layer 131, and comprises a group of fifteenth fibres 136 which are arranged in parallel with respect to each other, and orientated orthogonal with respect to the orientation of the thirteenth fibres 134.

A third sub-layer 133 of the third main layer 130 is applied to the second sub-layer 132 of the third main layer 130, and comprises a group of seventeenth fibres 133 which are arranged in parallel with respect to each other, and orthogonal with respect to the orientation of the fifteenth fibres 132. A main fibre orientation 107 of the third main layer 130 is defined by the orientation of the thirteenth fibres 134 of the first sub-layer 131 of the third main layer 130, and arranged such that the main fibre orientation 107 of the third main layer 130 is not parallel to the main fibre orientation 106 of the second main layer 120.

The third main layer 130 may be arranged to the second main layer 120 such that the main fibre orientation 107 of the third main layer 130 is orientated in one of a 30°-direction, a 45°-direction, a 60°-direction, and a 90°-direction with respect to the main fibre orientation 106 of the second main layer 120.

The second main layer 120 and the third main layer 130 may be designed like the first main layer 100.

The third main layer 130 may be arranged with respect to the second main layer 120 such that the main fibre orientation 107 of the third main layer 130 is parallel to the main fibre orientation 105 of the first main layer 100.

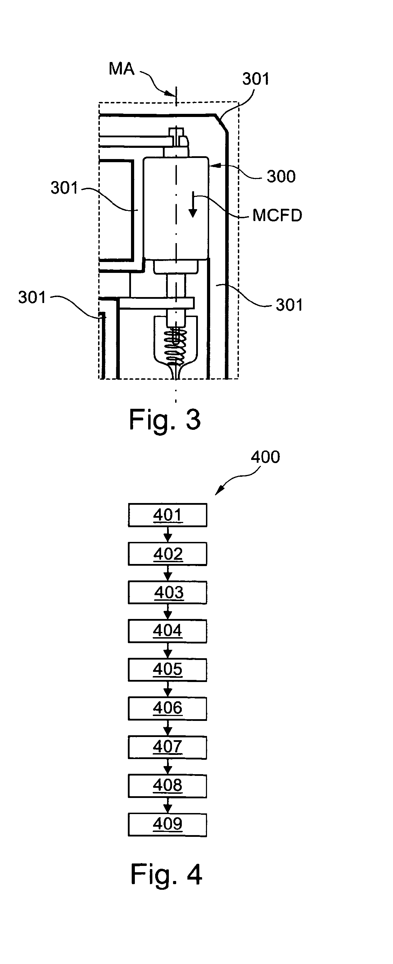

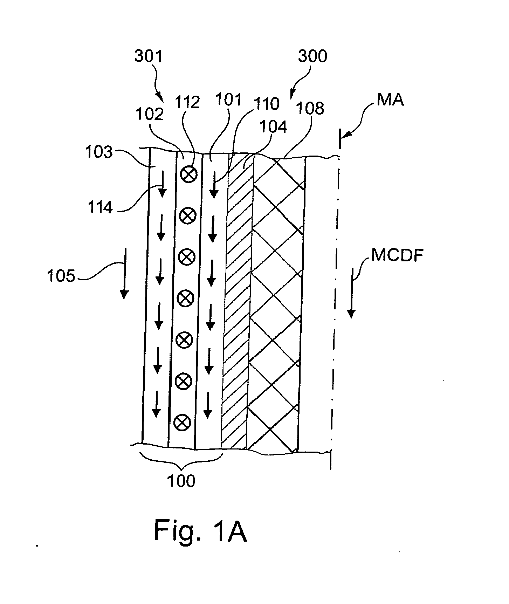

Fig. 3 shows a vacuum interrupter 103 embedded in an insulating material 301. The insulating material 301 may comprise a first main layer 100, a second main layer 120 and a third main layer 130 according to Fig. 1A to Fig. 1F, and Fig. 2, respectively, between the main layer, fully, partly or empty with 104.

The insulating material mentioned above, may comprise a material selected from the group comprising a fibre reinforced thermoplastic, a fibre-reinforced thermoset, a mineral reinforced material, a mixture of a glass fibre and of a mineral reinforced material, a nanoparticle reinforced material, and a mixture of a nanoparticle reinforced glass fibre and of a mineral reinforced material.

The insulating material may comprise a glass fibre reinforced thermoplastic based on one of semi- crystalline polyamide, partially aromatic co-polyamides, a mixture of semi-crystalline polyamides and of aromatic co-polyamides.

The glass fibre reinforced thermoplastic may comprise one of a material selected from the group consisting of PA6, PA66, PPA66, PA6/6T, PA6l/6T, PA6T/66, PA12, PA612, PA12G, PA-6-3, PAA, PPA, and PAMXD6, and a mixture of the above-mentioned material with additives.

Furthermore the insulating material may comprise a glass fibre reinforced thermoplastic based on one of a polyester-based polymer of the group consisting of PBT, PET, and a mixture of PBT and PET, and a mixture of the above-mentioned polyester-based polymers and additives.

The insulating material may comprise a glass fibre reinforced thermoplastic selected from the group consisting of PPE, PEEK, LCP, PES, PP, PPS, PPSU.

Furthermore, the insulating material may comprise a glass fibre reinforced thermoset material selected from the group consisting of BMC, UP, EP material.

Fig. 4 shows a schematic flow-chart of a method 400 of embedding a vacuum interrupter in an insulating material, with the steps of: applying a first sub-layer 401 to the vacuum interrupter 400; applying a second sub-layer 402 to the first sub-layer 401; applying a third sub-layer 403 to the second sub-layer 402, wherein the first sub-layer 401, the second sub-layer 402, and the third sub-layer 402 comprise fibres, wherein the first sub-layer comprises a group of first fibres which are arranged in parallel with respect to each other. The sublayer 401, 402, 403 could be made at one step. E.g. by injection moulding.

The method 400 of Fig. 4 further describes the steps of applying a first sub-layer of 404 a second main layer to the third sub-layer of the first main layer 403; applying a second sub-layer 405 of the second main layer to the first sub-layer 404 of the second main layer; applying a third sub-layer 406 of the second main layer to the second sub-layer of the second main layer; applying a first sub-layer of a third main layer 407 to the third sub-layer of the second main layer; applying a second sub-layer 408 of the third main layer to the first sub-layer of the third main layer; and applying a third sub-layer 409 of the third main layer to the second sub-layer of the third main layer.

The layer 404, 405, 406 could be made with one step like by injection moulding, the same apply to layers 407, 408 and 409.

While the invention has been illustrated and described in detail in the drawings and the foregoing description, such illustration and description are to be considered illustrative or exemplary and not restricted; the invention is not limited to the disclosed embodiments.

Other variations of the disclosed embodiments may be understood and effected by those skilled in the art and practising the claimed invention, from a study of the drawings, the disclosure, and the appended claims.

In the claims the word "comprising" does not exclude other elements or steps, and the indefinite article "a" or "an" does not exclude a plurality. An insulating material with a single sub-layer may fulfil further functions of several items recited in the claims. The more fact that certain measures are recited in mutually different dependent claims does not indicate, that a combination of these measures may not be used to advantage. Any reference signs in the claims should not be construed as limiting the scope.

### LIST OF REFERENCE SYMBOLS

- 100: First main layer
- 101: First sub-layer
- 102: Second sub-layer
- 103: Third sub-layer
- 104: Compensation layer, partly or fully filled, or only air
- 105: Main fibre orientation of the first main layer
- 106: Main fibre orientation of the second main layer
- 107: Main fibre orientation of the third main layer
- 108: Vacuum interrupter ceramic layer
- 110: Group of first fibres, first fibres
- 111: Group of fourth fibres, fourth fibres
- 112: Group of second fibres, second fibres
- 113: Group of fifth fibres, fifth fibres
- 114: Group of third fibres, third fibres
- 115: Group of sixth fibres, sixth fibres
- 120: Second main layer
- 121: First sub-layer of second main layer, first sub-layer
- 122: Second sub-layer of second main layer, second sub-layer
- 123: Third sub-layer of second main layer, third sub-layer
- 124: Group of seventh fibres, seventh fibres
- 126: Group of ninth fibres, ninth fibres
- 128: Group of eleventh fibres, eleventh fibres
- 130: Third main layer
- 131: First sub-layer of third main layer, first sub-layer
- 132: Second sub-layer of third main layer, second sub-layer
- 133: Third sub-layer of third main layer, third sub-layer
- 134: Group of thirteenth fibres, thirteenth fibres
- 136: Group of fifteenth fibres, fifteenth fibres
- 138: Group of seventeenth fibres, seventeenth fibres
- 300: Vacuum interrupter
- 301: Insulating material
- MA: Main axis of the vacuum interrupter
- MCFD: Main current flow direction of the vacuum interrupter

## Claims

1. Vacuum interrupter (300) embedded in an insulating material (301), the insulating material (301) comprising:
a first main layer (100) having a first sub-layer (101), a second sub-layer (102), and a third sub-layer (103);
wherein the second sub-layer (102) is arranged between the first sub-layer (101) and the third sub-layer (103);
wherein the first sub-layer (101), the second sub-layer (102), and the third sub-layer (103) comprise fibres;
wherein the first sub-layer (101) comprises a group of first fibres (110) which are arranged in parallel with respect to each other.

2. The vacuum interrupter (300) of claim 1,
wherein the orientation of the first fibres (110) is defined as a main fibre orientation (105) of the first main layer (100);
wherein the vacuum interrupter (300) has a main axis (MA) corresponding to a main current flow direction (MCFD) of the vacuum interrupter (300).
wherein the orientation of the first fibres (110) is parallel or orthogonal to the main axis (MA) of the vacuum interrupter (300).

3. The vacuum interrupter (300) of any one of the preceding claims,
wherein the second sub-layer (102) comprises a group of second fibres (112) which are arranged in parallel with respect to each other.

4. The vacuum interrupter (300) of claim 3,
wherein the second fibres (112) are orientated in a direction which is not parallel to the direction of the first fibres (110).

5. The vacuum interrupter (300) of any one of claims 3 or 4,
wherein the second fibres (112) are orientated in one of a 30°-direction, a 45°-direction, a 60°-direction, and a 90°-direction with respect to the direction of the first fibres (110).

6. The vacuum interrupter (300) of any one of the preceding claims,
wherein the third sub-layer (103) comprises a group of third fibres (114) which are arranged in parallel with respect to each other.

7. The vacuum interrupter (300) of claim 6,
wherein the third fibres (114) are orientated in a direction which is not parallel to the direction of the second fibres (112).

8. The vacuum interrupter (300) of any one of claims 6 or 7,
wherein the third fibres (114) are orientated in one of a 30°-direction, a 45°-direction, a 60°-direction, and a 90°-direction with respect to the direction of the second fibres (112).

9. The vacuum interrupter (300) of any one of claims 6 to 8,
wherein the third fibres (114) are orientated parallel to the first fibres (110).

10. The vacuum interrupter (300) of any one of the preceding claims, the insulating material (301) further comprising:
a second main layer (120);
wherein the second main layer (120) is designed like the first main layer (100);
wherein the second main layer (120) is arranged with respect to the first main layer (100) such that the main fibre orientation (106) of the second main layer (120) is not parallel to the main fibre orientation (105) of the first main layer (100).

11. The vacuum interrupter (300) of claim 10,
wherein the second main layer (120) is arranged with respect to the first main layer (100) such that the main fibre orientation (106) of the second main layer (120) is orientated in one of a 30°-direction, a 45°-direction, a 60° direction, and a 90° direction with respect to the main fibre orientation (105) of the first main layer (100).

12. The vacuum interrupter (300) of any one of claims 10 or 11, the insulating material (301) further comprising:
at least one third, additional main layer (130);
wherein the third main layer (130) is designed like the first main layer (100);
wherein the third main layer (130) is arranged with respect to the second main layer (120) such that the main fibre orientation (107) of the third main layer (130) is not parallel to the main fibre orientation (106) of the second main layer (120).

13. The vacuum interrupter (300) of any one of the preceding claims,
wherein the insulating material (301) comprises a material selected from the group comprising a fibre reinforced thermoplastic, a fibre reinforced thermoset, a mineral reinforced material, a mixture of a glass fibre and of a mineral reinforced material, a nano particle reinforced material, and a mixture of a nano particle reinforced glass fibre and of a mineral reinforced material.

14. Use of an insulating material (301) for embedding a vacuum interrupter (300) according to any one of claims 1 to 13, the insulating material (301) comprising:
a first main layer (100) having a first sub-layer (101), a second sub-layer (102), and a third sub-layer (103);
wherein the second sub-layer (102) is arranged between the first sub-layer (101) and the third sub-layer (103);
wherein the first sub-layer (101), the second sub-layer (102), and the third sub-layer (103) comprise fibres;
wherein the first sub-layer (101) comprises a group of first fibres (110) which are arranged in parallel with respect to each other.

15. Method (400) of embedding a vacuum interrupter (300) in an insulating material (301), the method (400) comprising the steps of:
Applying a first sub-layer (101) to the vacuum interrupter (300, 401);
Applying a second sub-layer (102) to the first sub-layer (101, 402);
Applying a third sub-layer (103) to the second sub-layer (102, 403);
wherein the first sub-layer (101), the second sub-layer (102), and the third sub-layer (103) comprise fibres;
wherein the first sub-layer (101) comprises a group of first fibres (110) which are arranged in parallel with respect to each other.

16. Method according to one of the aforesaid claims, **characterized in that** the sublayer could be made separately or with one step, e.g. injection moulding.
Method according to one of the aforesaid claims, **characterized in that** between the Vacuuminturrupter and the layers, a no filled air gap, or a partly filled gap, or fully filled gap with compensation and/or adhesive material is arranged.
